(19) Europäisches Patentamt
European Patent Office
Office européen des brevets

(11) **EP 3 435 252 A1**

(12) **EUROPEAN PATENT APPLICATION**
published in accordance with Art. 153(4) EPC

(43) Date of publication:
**30.01.2019 Bulletin 2019/05**

(51) Int Cl.:
***G06F 17/30*** (2019.01)

(21) Application number: **17769310.8**

(86) International application number:
**PCT/CN2017/076037**

(22) Date of filing: **09.03.2017**

(87) International publication number:
**WO 2017/162033 (28.09.2017 Gazette 2017/39)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **22.03.2016 CN 201610166580**

(71) Applicant: **Alibaba Group Holding Limited Grand Cayman (KY)**

(72) Inventors:
• **HUANG, Yan**
**Hangzhou**
**Zhejiang 311121 (CN)**
• **HE, Le**
**Hangzhou**
**Zhejiang 311121 (CN)**
• **SHI, Yingjie**
**Hangzhou**
**Zhejiang 311121 (CN)**
• **ZHANG, Jie**
**Hangzhou**
**Zhejiang 311121 (CN)**
• **ZHANG, Chen**
**Hangzhou**
**Zhejiang 311121 (CN)**

(74) Representative: **Finnegan Europe LLP**
**1 London Bridge**
**London SE1 9BG (GB)**

(54) **OPTIMIZATION METHOD, EVALUATION METHOD, PROCESSING METHOD, AND DEVICE FOR DATA MIGRATION**

(57) The embodiments of the present invention provide an optimization method, an evaluation method and a processing method and apparatuses for data migration, wherein the optimization method includes: generating a plurality of data migration solutions according to the principle of preferentially duplicating one or more to-be-migrated data units with more first depended data volume to a target cluster and then switching a computing cluster; calculating bandwidth status data between clusters after switching the computing cluster; and performing optimized selection on all the data migration solutions according to the bandwidth status data. By generating a plurality of data migration solutions according to the principle of preferentially duplicating a hot data unit with a relatively high depended data volume and then switching a computing cluster, performing predictive evaluation on each of the solutions based on bandwidth status data, and then performing optimized selection, the optimization method for data migration according to the embodiments of the present invention can obtain a preferred data migration solution, improve the efficiency of data migration, and reduce the risk of data migration failure.

FIG. 3

EP 3 435 252 A1

## Description

The present application claims priority to the Chinese patent application filed on March 22, 2016 and entitled "Optimization method, evaluation method and processing method and apparatuses for data migration" with the application No. 201610166580.0, which is incorporated herein by reference in its entirety.

## Technical field

Embodiments of the present invention relate to an optimization method, an evaluation method and a processing method and apparatuses for data migration, which belong to the field of computer technologies.

## Background art

The data migration mode in the prior art is to first duplicate all data units of a to-be-migrated project unit from a source cluster to a target cluster, during which all computing tasks related to the migrated data are still running in the source cluster, and after all are duplicated, switch the computing tasks from the source cluster to the target cluster. For large-scale data migrations (for example, a project unit that contains a relatively large amount of data), the entire process will take a long time. Moreover, before the existing data is migrated, no evaluation is performed based on a data dependence relationship, that is, the influence of the data dependence relationship on the bandwidth between clusters after migration is not considered.

During implementation of the present invention, the inventors find that the following defects exist in the prior art:

1) Defects brought by the generation of new data: new data are frequently generated in some large-scale services, and the speed at which new data is generated is very high; however, the computing tasks are switched after all data is duplicated in the prior art, which will result in very long migration time and extremely low migration efficiency; and in the meanwhile, the computing tasks are still running in the source cluster and will keep generating new data. If the speed at which new data is generated is greater than the speed at which data is migrated and duplicated (this situation also happens frequently), the migration task will never end unless the service stops generating new data.

2) Defects brought by the lack of evaluation based on the data dependence relationship: major problems are often discovered after data migration if no evaluation based on the data dependence relationship is performed before the migration. As complicated dependence relationship exists between data units, changes in the data access amount between clusters will be caused after the migration. If no sufficient evaluation is performed before migration, deterioration of network bandwidth between clusters may be caused after the migration.

## Summary of invention

The embodiments of the present invention provide an optimization method, an evaluation method and a processing method and apparatuses for data migration, to solve the defects brought by the generation of new services and the defects brought by the lack of evaluation on the data dependence relationship in the prior art.

The embodiments of the present invention provide an optimization method for data migration, including:

a plurality of data migration solutions are generated according to the principle of preferentially duplicating one or more to-be-migrated data units with a relatively high first depended data volume to a target cluster as to-be-duplicated data units and then switching a computing cluster, wherein the first depended data volume is all the depended data volumes of the to-be-migrated data units;
for each of the data migration solutions, bandwidth status data between clusters after switching the computing cluster is calculated; and
optimized selection is performed on each of the data migration solutions according to the bandwidth status data.

The embodiments of the present invention further provide an evaluation method for data migration, including:

a second depended data volume of one or more data units to be duplicated from a source cluster to a target cluster before switching a computing cluster is acquired, wherein the second depended data volume is a depended data volume between the to-be-duplicated data units and other data units outside the target cluster;
bandwidth status data between clusters after switching the computing cluster is calculated; and
whether a data migration solution is feasible is determined according to whether the bandwidth status data satisfies a preset bandwidth feasibility condition.

The embodiments of the present invention further provide a processing method for data migration, including:

one or more to-be-migrated data units with a relatively high first depended data volume are preferentially duplicated to a target cluster as to-be-duplicated data units, wherein the first depended data volume is all the depended data volumes of the to-be-migrated data units;
a computing cluster is switched; and
the remaining one or more to-be-migrated data units are migrated to the target cluster.

The embodiments of the present invention further provide an optimization apparatus for data migration, including:

a data migration solution generation module for generating a plurality of data migration solutions according to the principle of preferentially duplicating one or more to-be-migrated data units with a relatively high first depended data volume to a target cluster as to-be-duplicated data units and then switching a computing cluster, and triggering a bandwidth status data calculation module to calculate and process each of the data migration solutions, wherein the first depended data volume is all the depended data volumes of the to-be-migrated data units;
the bandwidth status data calculation module for calculating bandwidth status data between clusters after the computing cluster is switched; and
an optimized selection module for performing optimized selection on all the data migration solutions according to the bandwidth status data.

The embodiments of the present invention further provide an evaluation apparatus for data migration, including:

a fourth acquisition module for acquiring a second depended data volume of one or more data units to be duplicated from a source cluster to a target cluster before a computing cluster is switched, wherein the second depended data volume is a depended data volume between the to-be-duplicated data units and other data units outside the target cluster;
a bandwidth status data calculation module for calculating bandwidth status data between clusters after the computing cluster is switched; and
a judgement module for determining whether a data migration solution is feasible according to whether the bandwidth status data satisfies a preset bandwidth feasibility condition.

The embodiments of the present invention further provide a processing apparatus for data migration, including:

a duplication module for preferentially duplicating one or more to-be-migrated data units with a relatively high first depended data volume to a target cluster as to-be-duplicated data units, wherein the first depended data volume is all the depended data volumes of the to-be-migrated data units;
a switching module for switching a computing cluster; and
a remaining data migration module for migrating the remaining one or more to-be-migrated data units to the target cluster.

By generating a plurality of migration solutions according to the principle of preferentially duplicating a hot data unit with a relatively high depended data volume and then switching a computing cluster, performing predictive evaluation on each of the solutions based on bandwidth status data, and then performing optimized selection, the optimization method and apparatus for data migration according to the embodiments of the present invention can obtain a preferred data migration solution, improve the efficiency of data migration, and reduce the risk of data migration failure.

The evaluation method and apparatus for data migration according to the embodiments of the present invention are applied before an actual data migration operation is carried out, for performing simulated evaluation on the network bandwidth state based on the depended data volume of the to-be-duplicated data unit and finally determining whether the solution is feasible according to the bandwidth status data, thereby reducing the risk of data migration failure.

By way of firstly duplicating a hot data unit with a relatively high depended data volume and then switching a computing cluster and finally migrating cold data, the processing method and apparatus for data migration according to the embodiments of the present invention can complete the switching of the computing cluster as soon as possible, thereby improving the efficiency of data migration. As new data generated after switching the computing cluster will be stored in the target cluster, the influence brought by the continual generation of new data is also solved.

The above explanation is merely a summary of the technical solution of the present invention and can be implemented according to the content of the specification for the purpose of clearer understanding of the technical means of the present invention. To make the above-mentioned and other objects, features and advantages of the present invention more obvious and easier to understand, exemplary implementation manners of the present invention are listed below.

**Brief description of the drawings**

Fig. 1 is a first schematic diagram of an embodiment of the present invention for explaining the data migration principle;
Fig. 2 is a second schematic diagram of an embodiment of the present invention for explaining the data migration principle;
Fig. 3 is a first schematic diagram of the flow of an optimization method for data migration according to embodiment 1 of the present invention;
Fig. 4 is a second schematic diagram of the flow of an optimization method for data migration according to embodiment 1 of the present invention;
Fig. 5 is a schematic diagram of a curve of the current bandwidth usage amount collected by a bandwidth monitoring device according to embodiment 1 of the present invention;
Fig. 6 is a schematic diagram of a curve of a bandwidth usage amount after addition;
Fig. 7 is a schematic diagram of a curve generated according to a duplication time and a probability of full bandwidth corresponding to each data migration solution;
Fig. 8 is a schematic diagram of the flow of an evaluation method for data migration according to embodiment 2 of the present invention;
Fig. 9 is a schematic diagram of the flow of a processing method for data migration according to embodiment 3 of the present invention;
Fig. 10 is a schematic structural diagram of an optimization apparatus for data migration according to embodiment 4 of the present invention;
Fig. 11 is a schematic structural diagram of an evaluation apparatus for data migration according to embodiment 5 of the present invention; and
Fig. 12 is a schematic structural diagram of a processing apparatus for data migration according to embodiment 6 of the present invention.

**Detailed description**

Exemplary embodiments of the present disclosure will be described in more detail below with reference to the accompanying drawings. Although exemplary embodiments of the present disclosure are shown in the accompanying drawings, it should be understood that the present disclosure can be implemented in various ways and should not be limited by the embodiments illustrated herein. On the contrary, these embodiments are provided for the purpose of understanding the present disclosure more thoroughly, and completely conveying the scope of the present disclosure to a person skilled in the art.

The primary technical content involved in the embodiments of the present invention is data migration. Data migration means to migrate one or more project units from a source cluster to a target cluster, in which the project unit contains at least one data unit and at least one computing task, and the data unit can be a data sheet or a collection unit composed of multiple data sheets. From another perspective, data migration can also be considered as migrating one or more data units and one or more computing tasks corresponding to these data units from the source cluster to the target cluster. In addition, the cluster can be considered as a group of computer group systems that work in cooperation to provide unified service to the outside world.

Data migration needs to complete the following two parts of work:

1) Data unit transfer: the data units in each project unit in the source cluster are transferred into the target cluster. Normally, they are duplicated from the source cluster to the target cluster by way of duplication, and in the meanwhile, the computing tasks are still working in the source cluster.

2) Computing cluster switching: some or all computing tasks of each project unit are switched from the source cluster to the target cluster (this process does not involve data transmission). After switching, all computing tasks will run in the target cluster, and the new data generated will also be stored in the target cluster.

Data migration will also involve a dependence relationship between data units. After data migration is completed, the network bandwidth between the target cluster and other clusters will be affected as a result of the dependence relationship. The network bandwidth refers to the amount of information flowing from one end to another end in a time unit, i.e. data transmission rate, and is an important indicator for measuring the network usage condition.

The dependence relationship between data is generated by the input/output relationship of the computing tasks.

For example, data unit a is an input of a certain computing task, while data unit b is an output to the computing task. Then it is defined that data unit b depends on data unit a. That is to say, a dependence relationship is determined by a data input/output relationship of a computing task. For data unit a, the dependence relationship is mainly reflected in the following fact: in order to output data to data unit b, the computing tasks need to read the data in data unit a.

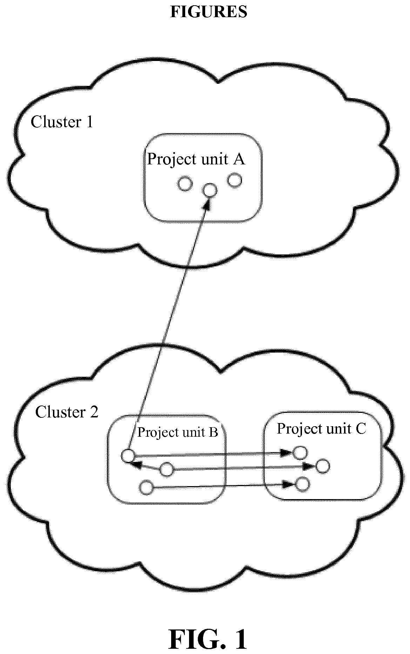

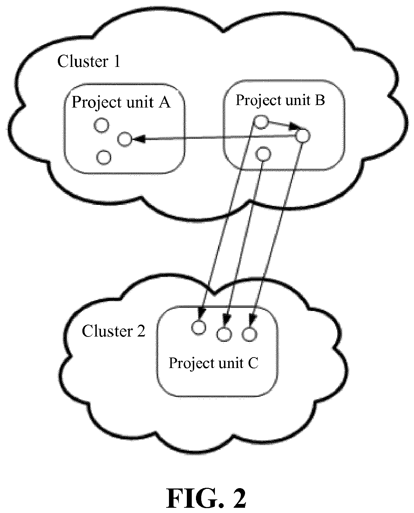

The influence of the dependence relationship between data on data migration is further explained below through Fig. 1 and Fig. 2. As shown in Fig. 1 and Fig. 2 below, the dots in the drawings represent data units in project units, and the lines in the drawings represent the dependence relationship between the data units.

As can be seen from the drawings, there are more dependence relationships between data units in project unit B and project unit C, while there are fewer dependence relationships between data units in project unit B and project unit A. Therefore, computing tasks in project unit B will access the data units in project unit C more, thereby producing a higher data access amount. In Fig. 1, as project unit B and project unit C are in the same cluster, the data access amount between project unit B and project unit C will not occupy the bandwidth between clusters. Moreover, in Fig. 1 and Fig. 2, the dependence relationship between data units inside project unit B will not affect the bandwidth either.

If project unit B is migrated from cluster 2 to cluster 1, the result of the migration is as shown in Fig. 2. The following changes can be seen from the figure: the data access amount between project unit B and project unit C will occupy the bandwidth between cluster 1 and cluster 2, and the data access amount between project unit A and project unit B will no longer occupy the bandwidth between the clusters. Since the data access amount between project unit B and project unit C is obviously greater than the data access amount between project unit B and project unit A, the data access amount between cluster 1 and cluster 2 increases and occupies more bandwidth than the situation in Fig. 1. If project unit B is rashly migrated from cluster 2 to cluster 1, it may cause the bandwidth between cluster 1 and cluster 2 to be full, and lead to deterioration of the network environment.

It can be seen that, due to the presence of dependence relationships, data migration will have greater effect on the network environment between clusters, especially the bandwidth.

Embodiment 1

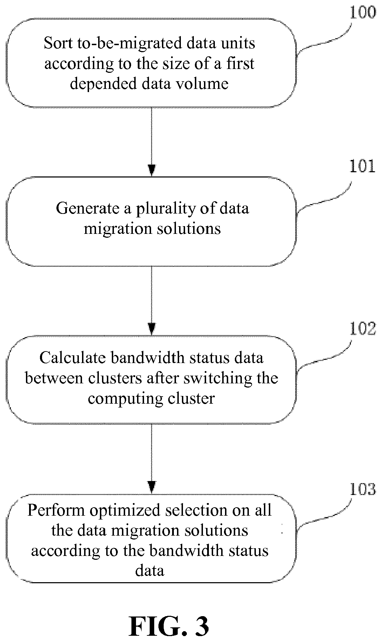

Fig. 3 is a first schematic diagram of the flow of an optimization method for data migration according to embodiment 1 of the present invention. The optimization method includes the processing in the following step 101 to step 103.

Step 101: a plurality of data migration solutions are generated according to the principle of preferentially duplicating one or more to-be-migrated data units with a relatively high first depended data volume to a target cluster as to-be-duplicated data units and then switching a computing cluster. The first depended data volume is all the depended data volumes of the to-be-migrated data units. The first depended data volume may include depended data volume inside the same project unit and may also include depended data volume of other project units except for the project unit where the data units are located. In effect, there may also be a depended data volume across clusters. In addition, the switching the computing cluster here refers to the action of switching computing tasks related to the to-be-migrated data units to a target cluster, which can be a behavior of switching all associated computing tasks or a behavior of switching some computing tasks. It should be noted that the relationship between computing tasks and data units is merely a data access relationship, and this type of data access relationship does not necessarily require the computing tasks and the data units to be in the same computing cluster.

In the above-mentioned principle, all the to-be-migrated data units are in effect divided into two parts: a part of data units (which can be regarded as a hot data unit) is preferentially duplicated, and another part of data units (which can be regarded as a cold data unit) is gradually duplicated to the target cluster after the computing cluster is switched. The migration of cold data can be completed in a way other than concentrated duplication, and therefore, can be considered to occupy little bandwidth between clusters. For example, through an underlying data transmission mechanism between clusters, duplication may be performed in a relatively idle time period of the cluster system.

The hot data unit and the cold data unit here are entirely relative concepts, and standards can be customized. In this step, a special situation may also exist: the number of to-be-duplicated data units is equal to the number of to-be-migrated data units, that is, the data migration solution is a full volume migration solution.

In addition, when selecting which data units are in effect to be duplicated, the life cycle of the data units can also be considered. Life cycle refers to an effective existence time of a data unit. For example, many data only need to be temporarily accessed, and after a preset period of time, it will have no value in existence and can be deleted. Therefore, during duplication, the life cycle of the data can be judged to remove, from the list of to-be-duplicated data units, these data units that have already been beyond their life cycle or their life cycle is going to end, thus further improving the efficiency of data migration and avoiding the duplication of useless data units.

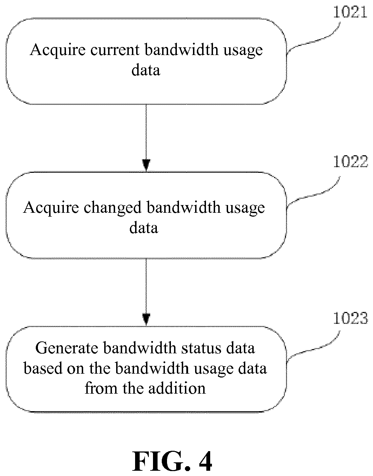

Step 102: for each data migration solution, bandwidth status data between the clusters after switching the computing cluster is calculated. The bandwidth status data between the clusters after switching the computing cluster includes the addition of at least two factors: current bandwidth usage data and changed bandwidth usage data caused by the preferentially migrated data units. Specifically, as shown in Fig. 4, it is a second schematic diagram of the flow of an optimization method for data migration according to embodiment 1 of the present invention. In step 103, the process of calculating bandwidth status data between the clusters after switching the computing cluster can further include:

Step 1021: current bandwidth usage data is acquired. The current bandwidth usage data here is bandwidth usage data before switching the computing cluster.

Step 1022: changed bandwidth usage data caused after switching the computing cluster is acquired according to a second depended data volume of the one or more to-be-duplicated data units. The second depended data volume is a depended data volume between the one or more to-be-duplicated data units and other data units outside the target cluster. The second depended data volume here is the depended data volume that only affects the bandwidth between the clusters.

Step 1023: the current bandwidth usage data is added to the changed bandwidth usage data, to generate bandwidth status data based on bandwidth usage data from the addition.

Step 103: optimized selection is performed on the data migration solutions according to the bandwidth status data.

The above-mentioned multiple to-be-migrated data units generally belong to one or more to-be-migrated project units. As previously stated, data migration is generally performed with project unit as the unit. The above-mentioned operation of switching the computing cluster is specifically switching all computing tasks in the one or more to-be-migrated project units to a target cluster.

By generating a plurality of migration solutions according to the principle of preferentially duplicating a hot data unit with a relatively high depended data volume and then switching a computing cluster, performing predictive evaluation on each of the solutions based on bandwidth status data, and then performing optimized selection, the above-mentioned optimization method for data migration can obtain a preferred data migration solution, improve the efficiency of data migration, and reduce the risk of data migration failure.

In addition, before the above-mentioned step 101, the method can further include:

Step 100: the plurality of to-be-migrated data units in a source cluster are sorted according to the size of the first depended data volume. The first depended data volume of each to-be-migrated data unit can be acquired from historical data corresponding to each to-be-migrated data unit. There will be access record information about the data in the system log, and the above-mentioned first depended data volume can be acquired according to these pieces of access record information.

For example, to migrate project unit 1 (PI in the table below) and project unit 2 (P2 in the table below) from a source cluster to a target cluster, the first depended data volume of each data sheet (T1 to T8) and the size of each data sheet itself in project unit 1 and project unit 2 are acquired and are sorted according to the first depended data volume, as in Table 1 below:

Table 1

| Project unit | Data sheet | First depended data volume (TB) | Size of data sheet (TB) |
|---|---|---|---|
| P1 | T1 | 604.0587748 | 509.2679144 |
| P1 | T2 | 273.622409 | 5809.682572 |
| P1 | T3 | 155.7736591 | 2592.183048 |
| P2 | T4 | 109.7930397 | 294.316627 |
| P1 | T5 | 85.295671 | 1.581307012 |
| P1 | T6 | 65.62373626 | 181.4551872 |
| P2 | T7 | 28.8274278 | 81.43424138 |
| P2 | T8 | 24.71642052 | 15.24111635 |

It should be noted that in the above-mentioned flow, step 102 is performed after a plurality of migration solutions are generated in the above-mentioned step 101. However, a person skilled in the art can understand that the operation of calculating the bandwidth status data in step 102 can also be performed after one data migration solution is produced in step 102, without waiting for the generation of all of the plurality of data migration solutions. Alternatively, it is also possible to generate a plurality of data migration solutions by way of loop traversal according to the sorting of the to-be-migrated data units in step 100 and according to the principle in step 101, starting from duplicating all the to-be-migrated data units once, with one data unit being decreased progressively at a time, until only duplicating the to-be-migrated data unit with the most first depended data volume (reverse progressive increase is also applicable),.

Explanation is made in more detail below with regard to two aspects: how to calculate bandwidth status data between clusters after switching the computing cluster and how to perform optimized evaluation on solutions.

(2) Calculation of bandwidth status data

In the above-mentioned steps, the bandwidth usage data can be sampling data of a bandwidth usage amount corresponding to a time point in a pre-determined time period, and the bandwidth status data can be the probability of full bandwidth.

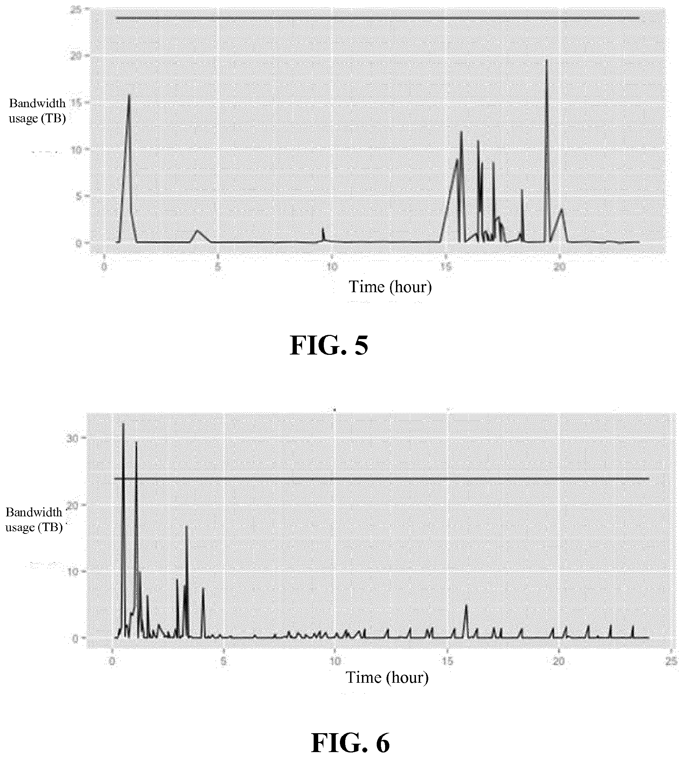

Further, the above-mentioned step 1021 can specifically include: a current bandwidth usage amount is acquired, and the current bandwidth usage amount in a pre-determined time period is sampled to generate first sampling data. The current bandwidth usage amount can be obtained by way of real-time monitoring and recording through bandwidth monitoring devices. Fig. 5 is a schematic diagram of a curve of the current bandwidth usage amount collected by a bandwidth monitoring device. The horizontal axis is time with hour as the unit, and the vertical axis is a bandwidth usage amount with TB (terabyte) as the unit. The above-mentioned first sampling data can be obtained through sampling the diagram. The horizontal line from the upper part of the diagram is the bandwidth upper limit, and if the bandwidth usage amount exceeds the upper limit value, the bandwidth is considered to be full.

The above-mentioned step 1022 can specifically include: second sampling data of a historical bandwidth usage amount corresponding to a time point in a pre-determined time period is generated according to historical data related to the second depended data volume. Access records of the data units are all recorded in the history log. By querying the records in the history log, information related to the second depended data volume can be filtered out, and then counting and sampling can be performed to generate the above-mentioned second sampling data.

The above-mentioned step 1023 can specifically include: the first sampling data is added to the second sampling data, and the probability of full bandwidth is calculated based on third sampling data from the addition. Fig. 6 is a schematic diagram of a curve of the bandwidth usage amount after the addition. It can be seen that in some parts of the time period, the bandwidth usage amount exceeds the bandwidth upper limit, that is, the situation of full bandwidth appears.

The formula for calculating the probability of full bandwidth can specifically be:

$$P=TM1/TM2……\text{formula (1)}$$

Here, P is the probability of full bandwidth, TM1 is the length of time when the bandwidth in the third sampling data exceeds the bandwidth upper limit, and TM2 is the time length of a pre-determined time period. In a practical application, TM1 and TM2 can be counted with minute as the unit.

The pre-determined time period in the above step 1021 and step 1022 can be a fixed time period of each day. For example, counting and sampling are performed according to historical data or bandwidth monitoring data of 00:00 to 09:00 each day in the last N days (for example, 30 days), to respectively generate first sampling data and second sampling data, and then to calculate the probability of full bandwidth in the time period according to third sampling data from the addition.

(2) How to perform optimized evaluation on solutions

After calculating the bandwidth status data as above, the solutions can be directly filtered according to the advantages and disadvantages of the bandwidth status data. For example, the solution with lower probability of full bandwidth is directly selected. In addition, after predicting the probability of full bandwidth for a data migration solution, the probability of full bandwidth can also be judged according to a preset condition. If the probability of full bandwidth is too high, then it is considered that the data migration solution is not feasible at all, and the data migration solution is abandoned directly. For example, the probability threshold of full bandwidth is set to 95%. If the predicted probability of full bandwidth exceeds 95%, then the data migration solution is abandoned directly.

In addition, before starting the above-mentioned optimization method for data migration, predictive evaluation of the bandwidth status data can be firstly performed on the full volume migration solution, that is, calculating the bandwidth status data between clusters in the case of full volume data migration. If the bandwidth status data does not satisfy a preset bandwidth feasibility condition (for example, the probability of full bandwidth is too high), then it is considered that all the migration solutions are infeasible (because no matter which migration solution it is, the only difference lies in the data unit that is preferentially duplicated, but at last all solutions will complete full volume migration), and therefore, the flow of the optimization method is directly terminated.

In addition, in a practical application, optimized selection will be performed on the solutions in conjunction with the duplication time consumed for duplicating the above-mentioned to-be-duplicated data units before switching the computing cluster. That is, the probability of full bandwidth and the duplication time are considered comprehensively to determine the optimized solution.

The duplication time can be calculated according to given duplication transmission bandwidth conditions and data volume of the to-be-duplicated data units themselves. For example, the bandwidth for data migration will be given in advance, and then the duplication time can be calculated according to the size of the duplicated unit and the given bandwidth. If days are taken as the calculation unit, the following formula is generated:

Duplication days=data volume of the to-be-duplicated data unit/bandwidth for data migration given in advance/3600/24. Since the bandwidth is generally expressed with "data volume/second" as the unit, the formula is divided by 3,600 to obtain the number of hours used, and then is divided by 24 to convert hours to days.

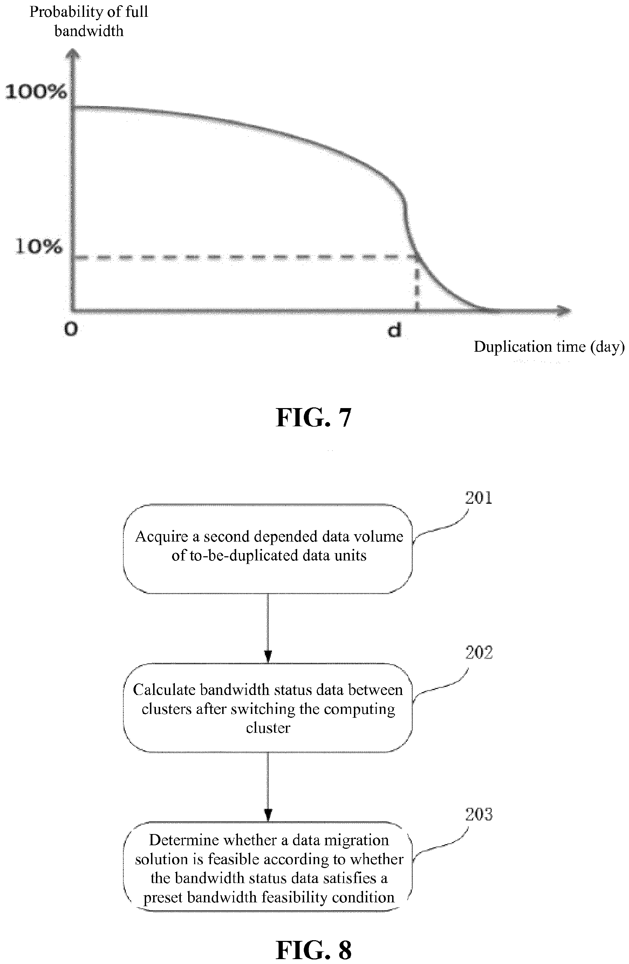

Fig. 7 is a schematic diagram of a curve generated according to the duplication time and the probability of full bandwidth corresponding to each data migration solution. Based on the curve in Fig. 7, a comprehensive choice is made according to actual needs. For example, in comprehensive consideration of the duplication time and the probability of full bandwidth, it is considered that when the duplication time is d days, the probability of full bandwidth is 10%, which is relatively low, and therefore, the data migration solution corresponding to the dot is preferred. Of course, it is also possible to take the switching of the computing cluster as soon as possible as a primary condition for consideration, and the data migration solution with shorter duplication time and higher probability of full bandwidth may then be selected.

The optimization method for data migration of this embodiment can generate a plurality of data migration solutions according to the principle of preferentially duplicating hot data and then switching the computing cluster, and then make a comprehensive judgement based on the probability of full bandwidth and the duplication time, and then select a preferred data migration solution, thereby greatly improving the efficiency of data migration and reducing the risk of data migration failure.

Embodiment 2

This embodiment involves the evaluation method for data migration. The method is used for performing simulated evaluation on a data migration solution before an actual data migration operation is carried out, to determine its feasibility. Fig. 8 is a schematic diagram of the flow of an evaluation method for data migration according to embodiment 2 of the present invention. The evaluation method includes:

Step 201: a second depended data volume of one or more data units to be duplicated from a source cluster to a target cluster before switching a computing cluster is acquired, wherein the second depended data volume is consistent with the meaning in the above-mentioned embodiment, i.e. depended data volume between the to-be-duplicated data units and other data units outside the target cluster. In this step, the to-be-duplicated data units can either be all of the to-be-migrated data units that need to be migrated, or some of the to-be-migrated data units that need to be migrated. That is, the evaluation apparatus of this embodiment can evaluate the full volume migration solution and can also evaluate a solution in which some hot data is migrated first, then the computing cluster is switched, and then cold data is migrated.

Step 202: bandwidth status data between clusters after switching the computing cluster is calculated. The step can specifically be step 1021 to step 1023 in the above-mentioned embodiment 1. Further, the bandwidth usage data can be sampling data of a bandwidth usage amount corresponding to a time point in a pre-determined time period, and the bandwidth status data can include the probability of full bandwidth. The specific solution described in the first point of the above-mentioned embodiment 1 can be used to specifically calculate the bandwidth status data, which will not be reiterated here.

Step 203: whether a data migration solution is feasible is determined according to whether the bandwidth status data satisfies a preset bandwidth feasibility condition. Specifically, it is possible to judge the probability of full bandwidth of the data migration solution according to a preset probability threshold of full bandwidth, and if it exceeds the probability threshold, then determine that the data migration solution is infeasible; otherwise, determine that it is feasible.

The evaluation method for data migration according to the embodiments of the present invention is applied before an actual data migration operation is carried out, for performing simulated evaluation on the network bandwidth state based on the depended data volume of the to-be-duplicated data unit, and finally determining whether the solution is feasible according to the bandwidth status data, thereby reducing the risk of data migration failure.

Embodiment 3

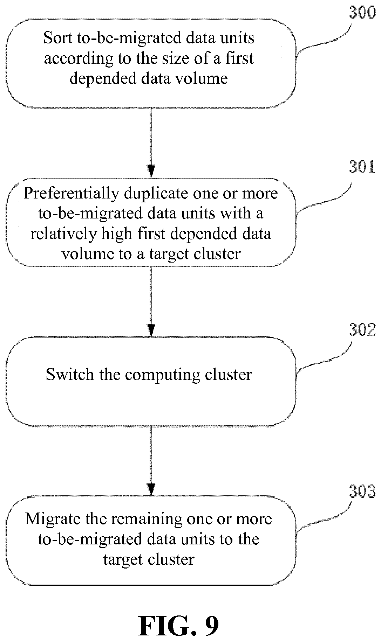

This embodiment involves a processing method for data migration. Fig. 9 is a schematic diagram of the flow of a processing method for data migration according to embodiment 3 of the present invention, including:

Step 301: one or more to-be-migrated data units with a relatively high first depended data volume are preferentially duplicated to a target cluster as to-be-duplicated data units, wherein the first depended data volume is all the depended data volumes of the to-be-migrated data units.

Step 302: the computing cluster is switched. The operation of switching the computing cluster here can specifically be switching all computing tasks in the one or more to-be-migrated project units to a target cluster. After switching the computing cluster, new data generated by computing tasks will by default be stored in the target cluster.

Step 303: the remaining one or more to-be-migrated data units are migrated to the target cluster.

Before the above-mentioned step 301, the method can further include step 300: the plurality of to-be-migrated data units in a source cluster are sorted according to the size of the first depended data volume. The plurality of to-be-migrated data units can belong to one or more to-be-migrated project units. Specifically, before step 300, the first depended data volume can be obtained according to statistics about historical data of the to-be-migrated data units.

In addition, before implementing the processing method for data migration of this embodiment, the evaluation method of embodiment 2 can be applied to determine the feasibility of the migration solution; and the optimization method for data migration of embodiment 1 can also be applied to select a more reasonable data migration solution to perform data migration.

By way of firstly duplicating a hot data unit with a relatively high depended data volume and then switching a computing cluster and finally migrating cold data, the processing method for data migration according to the embodiments of the present invention can complete the switching of the computing cluster as soon as possible, thereby improving the efficiency of data migration. As new data generated after switching the computing cluster will be stored in the target cluster, the influence brought by the continual generation of new data is also solved.

Embodiment 4

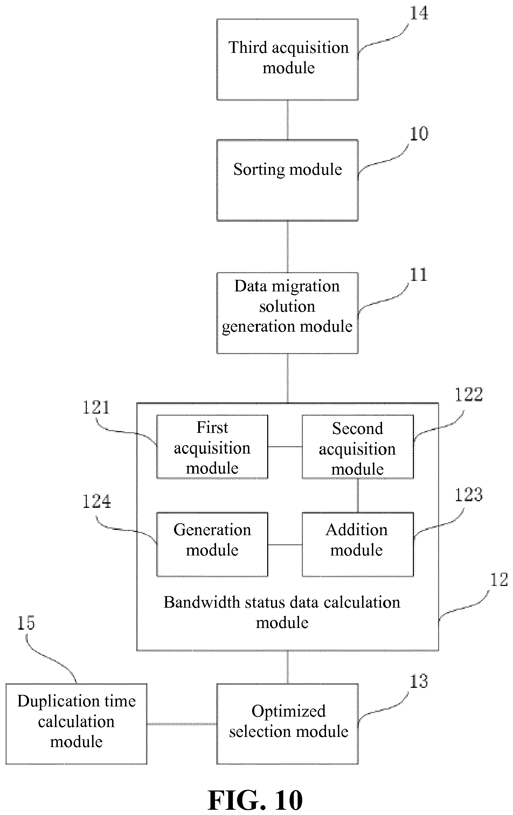

Fig. 10 is a schematic structural diagram of an optimization apparatus for data migration according to embodiment 4 of the present invention. The optimization apparatus includes a data migration solution generation module 11, a bandwidth status data calculation module 12 and an optimized selection module 13.

The data migration solution generation module 11 is used for generating a plurality of data migration solutions according to the principle of preferentially duplicating one or more to-be-migrated data units with a relatively high first depended data volume to a target cluster as to-be-duplicated data units and then switching a computing cluster, and triggering a bandwidth status data calculation module to calculate and process each of the data migration solutions, wherein the first depended data volume is all the depended data volumes of the to-be-migrated data units.

The bandwidth status data calculation module 12 is used for calculating bandwidth status data between clusters after the computing cluster is switched.

The optimized selection module 13 is used for performing optimized selection on all the data migration solutions according to the bandwidth status data.

The optimization apparatus can further include: a sorting module 10 for sorting the plurality of to-be-migrated data units in a source cluster according to the size of the first depended data volume. The plurality of to-be-migrated data units can belong to one or more to-be-migrated project units. Correspondingly, the switching of the computing cluster can specifically be switching all computing tasks in the one or more to-be-migrated project units to the target cluster. In addition, the optimization apparatus for data migration of this embodiment can further include: a third acquisition module 14 for acquiring the first depended data volume according to historical data of the to-be-migrated data units.

The above-mentioned bandwidth status data calculation module 12 can further include:

a first acquisition module 121 for acquiring current bandwidth usage data, wherein the current bandwidth usage data is bandwidth usage data before the computing cluster is switched;

a second acquisition module 122 for acquiring changed bandwidth usage data caused after the computing cluster is switched according to a second depended data volume of the one or more to-be-duplicated data units, wherein the second depended data volume is a depended data volume between the one or more to-be-duplicated data units and other data units outside the target cluster;

an addition module 123 for adding the current bandwidth usage data to the changed bandwidth usage data and generating bandwidth usage data from the addition; and

a generation module 124 for generating bandwidth status data based on the bandwidth usage data from the addition.

The above-mentioned bandwidth usage data can be sampling data of a bandwidth usage amount corresponding to a time point in a pre-determined time period, and the bandwidth status data can include the probability of full bandwidth.

In the above-mentioned first acquisition module 121, the current bandwidth usage data being acquired can include: a current bandwidth usage amount is acquired, and the current bandwidth usage amount in a pre-determined time period is sampled to generate first sampling data.

In the above-mentioned second acquisition module 122, the changed bandwidth usage data caused after the computing cluster is switched being acquired according to a second depended data volume of the one or more to-be-duplicated data units can include: second sampling data of a historical bandwidth usage amount corresponding to a time point in the pre-determined time period is generated according to historical data of the to-be-duplicated data unit.

In the above-mentioned addition module 123, the current bandwidth usage data being added to the changed bandwidth usage data to generate bandwidth usage data from the addition can include: the first sampling data is added to the second sampling data to generate third sampling data from the addition.

In the above-mentioned generation module 124, the bandwidth status data being generated based on the bandwidth usage data from the addition can include: the probability of full bandwidth is calculated based on the third sampling data from the addition. The probability of full bandwidth can be calculated using the above-mentioned formula (1).

In addition, the optimization apparatus for data migration of this embodiment can further include:

a duplication time calculation module 15 for calculating duplication time for duplicating the one or more to-be-duplicated data units in a given duplication transmission bandwidth condition according to data volume of the one or more to-be-duplicated data units themselves. Correspondingly, in the optimized selection module, the optimized selection being performed on the data migration solutions according to the bandwidth status data includes: a preferred data migration solution is comprehensively determined according to the bandwidth status data and the duplication time.

Further, the optimization apparatus for data migration of this embodiment can further include:

a data migration solution filtering module for judging the probability of full bandwidth of a data migration solution according to a preset probability threshold of full bandwidth, and if it exceeds the probability threshold, rejecting the data migration solution.

In addition, the optimization apparatus for data migration of this embodiment can further include:

a full volume migration evaluation module for calculating the bandwidth status data between clusters in the case of full volume data migration before the optimization processing, and if the bandwidth status data does not satisfy a preset bandwidth feasibility condition, then stopping optimization processing of the data migration solution.

By generating a plurality of migration solutions according to the principle of preferentially duplicating a hot data unit with a relatively high depended data volume and then switching a computing cluster, performing predictive evaluation on each of the solutions based on bandwidth status data, and then performing optimized selection, the optimization apparatus for data migration according to the embodiments of the present invention can obtain a preferred data migration solution, improve the efficiency of data migration, and reduce the risk of data migration failure.

Embodiment 5

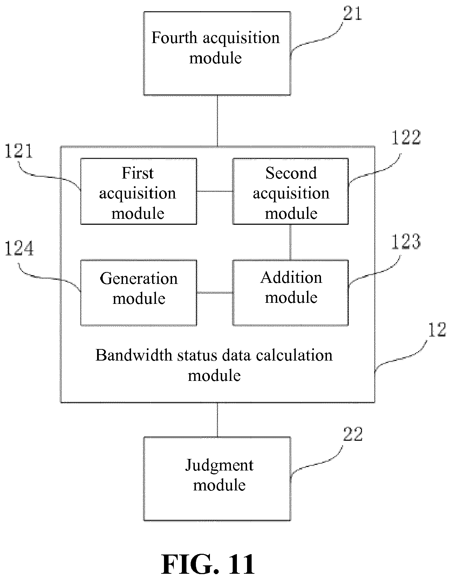

Fig. 11 is a schematic structural diagram of an evaluation apparatus for data migration according to embodiment 5 of the present invention. The evaluation apparatus includes a fourth acquisition module 21, a bandwidth status data calculation module 12 and a judgement module 22.

The fourth acquisition module 21 is used for acquiring a second depended data volume of one or more data units to be duplicated from a source cluster to a target cluster before a computing cluster is switched. Specifically, the second depended data volume can be acquired according to historical data of the to-be-duplicated data units. The second depended data volume is the depended data volume between the to-be-duplicated data units and other data units outside the target cluster. The to-be-duplicated data units can either be all the to-be-migrated data units that need to be migrated or some of the to-be-migrated data units that need to be migrated. That is, the evaluation apparatus of this embodiment can evaluate the full volume migration solution and can also evaluate a solution in which some hot data is migrated first, and then the computing cluster is switched, and finally cold data is migrated.

The bandwidth status data calculation module 12 is used for calculating bandwidth status data between clusters after the computing cluster is switched.

The judgement module 22 is used for determining whether a data migration solution is feasible according to whether the bandwidth status data satisfies a preset bandwidth feasibility condition.

The above-mentioned bandwidth status data calculation module 12 can further include:

a first acquisition module 121 for acquiring current bandwidth usage data;
a second acquisition module 122 for acquiring changed bandwidth usage data caused after the computing cluster is switched according to the second depended data volume of the one or more to-be-duplicated data units;
an addition module 123 for adding the current bandwidth usage data to the changed bandwidth usage data and generating bandwidth usage data from the addition; and
a generation module 124 for generating bandwidth status data based on the bandwidth usage data from the addition.

The above-mentioned bandwidth usage data is sampling data of a bandwidth usage amount corresponding to a time point in a pre-determined time period, and the bandwidth status data can include the probability of full bandwidth.

In the above-mentioned first acquisition module 121, the current bandwidth usage data being acquired can include: a current bandwidth usage amount is acquired, and the current bandwidth usage amount in a pre-determined time period is sampled to generate first sampling data.

In the above-mentioned second acquisition module 122, the changed bandwidth usage data caused after the computing cluster is switched being acquired according to a second depended data volume of the one or more to-be-duplicated data units can include: second sampling data of a historical bandwidth usage amount corresponding to a time point in the pre-determined time period is generated according to historical data of the to-be-duplicated data unit.

In the above-mentioned addition module 123, the current bandwidth usage data being added to the changed bandwidth usage data to generate bandwidth usage data from the addition can include: the first sampling data is added to the second sampling data to generate third sampling data from the addition.

In the above-mentioned generation module 124, the bandwidth status data being generated based on the bandwidth usage data from the addition can include: the probability of full bandwidth is calculated based on the third sampling data from the addition. The probability of full bandwidth can be calculated using the above-mentioned formula (1).

Further, in the above-mentioned judgement module 22, whether a data migration solution is feasible being determined according to whether the bandwidth status data satisfies a preset bandwidth condition can include: the probability of full bandwidth of the data migration solution is judged according to a preset probability threshold of full bandwidth, and if the probability exceeds the probability threshold, then it is determined that the data migration solution is infeasible; otherwise, it is determined that the solution is feasible.

The evaluation apparatus for data migration according to the embodiments of the present invention can be applied before an actual data migration operation is carried out, for performing simulated evaluation on the network bandwidth state based on the depended data volume of the to-be-duplicated data unit, and finally determining whether the solution is feasible according to the bandwidth status data, thereby reducing the risk of data migration failure.

Embodiment 6

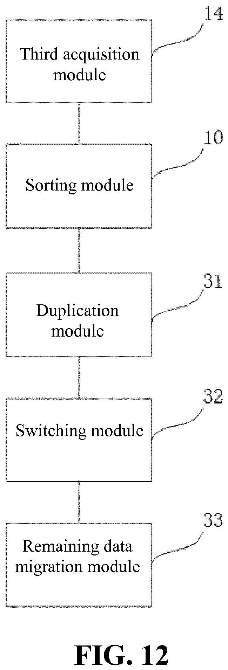

Fig. 12 is a schematic structural diagram of a processing apparatus for data migration according to embodiment 6 of the present invention. The processing apparatus includes a duplication module 31, a switching module 32 and a remaining data migration module 33.

The duplication module 31 is used for preferentially duplicating one or more to-be-migrated data units with a relatively high first depended data volume to a target cluster as to-be-duplicated data units, wherein the first depended data volume is all the depended data volumes of the to-be-migrated data units.

The switching module 32 is used for switching a computing cluster.

The remaining data migration module 33 is used for migrating the remaining one or more to-be-migrated data units to the target cluster.

The processing apparatus of this embodiment can further include: a sorting module 11 for sorting the plurality of to-be-migrated data units in a source cluster according to the size of the first depended data volume. The plurality of to-be-migrated data units can belong to one or more to-be-migrated project units. Correspondingly, the switching of the computing cluster can specifically be switching all computing tasks in the one or more to-be-migrated project units to the target cluster.

Further, the processing apparatus can further include: a third acquisition module 14 for acquiring the first depended data volume according to historical data of the to-be-migrated data units.

By way of firstly duplicating a hot data unit with a relatively high depended data volume and then switching a computing cluster and finally migrating cold data, the processing apparatus for data migration according to the embodiments of the present invention can complete the switching of the computing cluster as soon as possible, thereby improving the efficiency of data migration. As new data generated after switching the computing cluster will be stored in the target cluster, the influence brought by the continual generation of new data is also solved.

A person of ordinary skill in the art can understand that some or all steps for implementing the above-mentioned method embodiments can be completed through a program instructing related hardware. The aforementioned program can be stored in one computer readable storage medium. When the program is executed, steps included in the above-mentioned method embodiments are performed; and the aforementioned storage medium includes various media that can store program codes, such as ROM, RAM, magnetic disk or optical disk.

At last, it should be noted that the above embodiments are merely for the explanation of the technical solution of the present invention, instead of limitation. Although detailed explanation is made to the present invention with reference to the aforementioned embodiments, a person of ordinary skill in the art should understand that he/she can still make modifications to the technical solution recorded in the aforementioned embodiments or make equivalent substitutions to some or all technical features, and these modifications or substitutions do not make the essence of the corresponding technical solution depart from the scope of the technical solution according to the embodiments of the present invention.

**Claims**

1. An optimization method for data migration, comprising:

   generating a plurality of data migration solutions according to the principle of preferentially duplicating one or more to-be-migrated data units with a relatively high first depended data volume to a target cluster as to-be-duplicated data units and then switching a computing cluster, wherein the first depended data volume is all the depended data volumes of the to-be-migrated data units;
   for each of the data migration solutions, calculating bandwidth status data between clusters after switching the computing cluster; and
   performing optimized selection on all the data migration solutions according to the bandwidth status data.

2. The optimization method according to claim 1, **characterized in that** the plurality of to-be-migrated data units belong to one or more to-be-migrated project units, and the switching a computing cluster comprises: switching all computing tasks in the one or more to-be-migrated project units to the target cluster.

3. The optimization method according to claim 1, **characterized in that**
   the calculating bandwidth status data between clusters after switching the computing cluster comprises:

   acquiring current bandwidth usage data, the current bandwidth usage data being bandwidth usage data before switching the computing cluster;
   acquiring changed bandwidth usage data caused after switching the computing cluster according to a second depended data volume of the one or more to-be-duplicated data units, wherein the second depended data volume is a depended data volume between the one or more to-be-duplicated data units and other data units outside the target cluster; and
   adding the current bandwidth usage data to the changed bandwidth usage data, and generating bandwidth status data based on bandwidth usage data from the addition.

4. The optimization method according to claim 3, **characterized in that** the bandwidth usage data is sampling data of a bandwidth usage amount corresponding to a time point in a pre-determined time period, and the bandwidth status data comprises the probability of full bandwidth.

5. The optimization method according to claim 4, **characterized in that**
   the acquiring current bandwidth usage data comprises: acquiring a current bandwidth usage amount, and sampling the current bandwidth usage amount in a pre-determined time period to generate first sampling data;
   the acquiring changed bandwidth usage data caused after switching the computing cluster according to a second depended data volume of the one or more to-be-duplicated data units comprises: generating second sampling data of a historical bandwidth usage amount corresponding to a time point in the pre-determined time period according to historical data of the to-be-duplicated data units; and
   the adding the current bandwidth usage data to the changed bandwidth usage data and generating the bandwidth status data based on the bandwidth usage data from the addition comprises:
   adding the first sampling data to the second sampling data, and calculating the probability of full bandwidth based on third sampling data from the addition.

6. The optimization method according to claim 5, **characterized in that** the probability of full bandwidth is equal to the length of time when the bandwidth in the third sampling data exceeds a bandwidth upper limit divided by the time length of the pre-determined time period.

7. The optimization method according to claim 4, further comprising: judging the probability of full bandwidth of a data migration solution according to a preset probability threshold of full bandwidth, and if it exceeds the probability threshold, rejecting the data migration solution.

8. The optimization method according to claim 1, before the generating a plurality of data migration solutions, further comprising: sorting the plurality of to-be-migrated data units in a source cluster according to the size of the first depended data volume.

9. The optimization method according to claim 8, before the sorting the plurality of to-be-migrated data units in a source cluster according to the size of the first depended data volume, further comprising:
acquiring the first depended data volume according to historical data of the to-be-migrated data units.

10. The optimization method according to claim 8, before the sorting the plurality of to-be-migrated data units in a source cluster according to the size of the first depended data volume, further comprising:

calculating bandwidth status data between clusters in the case of full volume data migration; and
if the bandwidth status data does not satisfy a preset bandwidth feasibility condition, ending the optimization method.

11. The optimization method according to claim 1, **characterized in that** the generating a plurality of data migration solutions according to the principle of preferentially duplicating one or more to-be-migrated data units with a relatively high first depended data volume to a target cluster as to-be-duplicated data units and then switching a computing cluster comprises:
generating a plurality of data migration solutions according to the sorting of the to-be-migrated data units and according to the principle of preferentially duplicating one or more to-be-migrated data units with a relatively high first depended data volume to a target cluster as to-be-duplicated data units and then switching a computing cluster, starting from duplicating all the to-be-migrated data units once, with one data unit being decreased progressively at a time, until only duplicating the to-be-migrated data unit with the most first depended data volume.

12. The optimization method according to any one of claims 1 to 11, further comprising:

calculating duplication time for duplicating the one or more to-be-duplicated data units in a given duplication transmission bandwidth condition according to data volume of the one or more to-be-duplicated data units themselves; and
the performing optimized selection on all the data migration solutions according to the bandwidth status data comprises: comprehensively determining a preferred data migration solution according to the bandwidth status data and the duplication time.

13. An evaluation method for data migration, comprising:

acquiring a second depended data volume of one or more data units to be duplicated from a source cluster to a target cluster before switching a computing cluster, wherein the second depended data volume is a depended data volume between the to-be-duplicated data units and other data units outside the target cluster;
calculating bandwidth status data between clusters after switching the computing cluster; and
determining whether a data migration solution is feasible according to whether the bandwidth status data satisfies a preset bandwidth feasibility condition.

14. The evaluation method according to claim 13, **characterized in that** the plurality of to-be-duplicated data units belong to one or more to-be-migrated project units, and the switching a computing cluster comprises: switching all computing tasks in the one or more to-be-migrated project units to the target cluster.

15. The evaluation method according to claim 13, **characterized in that**
the calculating bandwidth status data between clusters after switching the computing cluster comprises:

acquiring current bandwidth usage data, the current bandwidth usage data being bandwidth usage data before switching the computing cluster;

acquiring changed bandwidth usage data caused after switching the computing cluster according to the second depended data volume of the one or more to-be-duplicated data units; and

adding the current bandwidth usage data to the changed bandwidth usage data, and generating bandwidth status data based on bandwidth usage data from the addition.

16. The evaluation method according to claim 15, **characterized in that** the bandwidth usage data is sampling data of a bandwidth usage amount corresponding to a time point in a pre-determined time period, and

the bandwidth status data comprises the probability of full bandwidth.

17. The evaluation method according to claim 16, **characterized in that**

the acquiring current bandwidth usage data comprises: acquiring a current bandwidth usage amount, and sampling the current bandwidth usage amount in a pre-determined time period to generate first sampling data;

the acquiring changed bandwidth usage data caused after switching the computing cluster according to the second depended data volume of the one or more to-be-duplicated data units comprises: generating second sampling data of a historical bandwidth usage amount corresponding to a time point in the pre-determined time period according to historical data related to the second depended data volume; and

the adding the current bandwidth usage data to the changed bandwidth usage data and generating the bandwidth status data based on bandwidth usage data from the addition comprises:

adding the first sampling data to the second sampling data, and calculating the probability of full bandwidth based on third sampling data from the addition.

18. The evaluation method according to claim 17, **characterized in that** the probability of full bandwidth is equal to the length of time when a bandwidth upper limit is exceeded in the third sampling data divided by the time length of the pre-determined time period.

19. The evaluation method according to claim 16, **characterized in that** the determining whether a data migration solution is feasible according to whether the bandwidth status data satisfies a preset bandwidth condition comprises:

judging the probability of full bandwidth of a data migration solution according to a preset probability threshold of full bandwidth, and if it exceeds the probability threshold, determining that the data migration solution is infeasible; otherwise, determining that it is feasible.

20. The evaluation method according to claim 13, **characterized in that** the acquiring a second depended data volume of one or more data units to be duplicated from a source cluster to a target cluster comprises:

acquiring the second depended data volume according to historical data of the to-be-duplicated data units.

21. A processing method for data migration, comprising:

preferentially duplicating one or more to-be-migrated data units with a relatively high first depended data volume to a target cluster as to-be-duplicated data units, wherein the first depended data volume is all the depended data volumes of the to-be-migrated data units;

switching a computing cluster; and

migrating the remaining one or more to-be-migrated data units to the target cluster.

22. The processing method according to claim 21, **characterized in that** the plurality of to-be-migrated data units belong to one or more to-be-migrated project units, and the switching a computing cluster comprises: switching all computing tasks in the one or more to-be-migrated project units to the target cluster.

23. The processing method according to claim 21, before preferentially duplicating one or more to-be-migrated data units with a relatively high first depended data volume to a target cluster as to-be-duplicated data units, further comprising:

sorting the plurality of to-be-migrated data units in a source cluster according to the size of the first depended data volume.

24. The processing method according to claim 23, before sorting the plurality of to-be-migrated data units in a source cluster according to the size of the first depended data volume, further comprising:

acquiring the first depended data volume according to historical data of the to-be-migrated data units.

25. An optimization apparatus for data migration, comprising:

a data migration solution generation module for generating a plurality of data migration solutions according to the principle of preferentially duplicating one or more to-be-migrated data units with a relatively high first depended data volume to a target cluster as to-be-duplicated data units and then switching a computing cluster, and triggering a bandwidth status data calculation module to calculate and process each of the data migration solutions;

the bandwidth status data calculation module for calculating bandwidth status data between clusters after the computing cluster is switched; and

an optimized selection module for performing optimized selection on all the data migration solutions according to the bandwidth status data.

26. The optimization apparatus according to claim 25, **characterized in that** the plurality of to-be-migrated data units belong to one or more to-be-migrated project units, and the switching a computing cluster comprises: switching all computing tasks in the one or more to-be-migrated project units to the target cluster.

27. The optimization apparatus according to claim 25, **characterized in that** the bandwidth status data calculation module comprises:

a first acquisition module for acquiring current bandwidth usage data, wherein the current bandwidth usage data is bandwidth usage data before the computing cluster is switched;

a second acquisition module for acquiring changed bandwidth usage data caused after the computing cluster is switched according to a second depended data volume of the one or more to-be-duplicated data units, wherein the second depended data volume is a depended data volume between the one or more to-be-duplicated data units and other data units outside the target cluster;

an addition module for adding the current bandwidth usage data to the changed bandwidth usage data and generating bandwidth usage data from the addition; and

a generation module for generating bandwidth status data based on the bandwidth usage data from the addition.

28. The optimization apparatus according to claim 27, **characterized in that** the bandwidth usage data is sampling data of a bandwidth usage amount corresponding to a time point in a pre-determined time period, and the bandwidth status data comprises the probability of full bandwidth.

29. The optimization apparatus according to claim 28, **characterized in that**
the acquiring current bandwidth usage data comprises: acquiring a current bandwidth usage amount, and sampling the current bandwidth usage amount in a pre-determined time period to generate first sampling data;

the acquiring changed bandwidth usage data caused after the computing cluster is switched according to a second depended data volume of the one or more to-be-duplicated data units comprises: generating second sampling data of a historical bandwidth usage amount corresponding to a time point in the pre-determined time period according to historical data of the to-be-duplicated data units; and

the adding the current bandwidth usage data to the changed bandwidth usage data and generating bandwidth usage data from the addition comprises: adding the first sampling data to the second sampling data to generate third sampling data from the addition; and

the generating bandwidth status data based on bandwidth usage data from the addition comprises: calculating the probability of full bandwidth based on the third sampling data from the addition.

30. The optimization apparatus according to claim 29, **characterized in that** the probability of full bandwidth is equal to the length of time when the bandwidth in the third sampling data exceeds a bandwidth upper limit divided by the time length of the pre-determined time period.

31. The optimization apparatus according to claim 28, further comprising:
a data migration solution filtering module for judging the probability of full bandwidth of a data migration solution according to a preset probability threshold of full bandwidth, and if it exceeds the probability threshold, rejecting the data migration solution.

32. The optimization apparatus according to claim 25, further comprising:
a full volume migration evaluation module for calculating the bandwidth status data between clusters in the case of full volume data migration before the optimization processing, and if the bandwidth status data does not satisfy a preset bandwidth feasibility condition, ending optimization processing of the data migration solutions.

33. The optimization apparatus according to any one of claims 25 to 32, further comprising:

   a duplication time calculation module for calculating duplication time for duplicating the one or more to-be-duplicated data units in a given duplication transmission bandwidth condition according to data volume of the one or more to-be-duplicated data units themselves,
   wherein in the optimized selection module, the performing optimized selection on all the data migration solutions according to the bandwidth status data comprises: comprehensively determining a preferred data migration solution according to the bandwidth status data and the duplication time.

34. The optimization apparatus according to claim 25, further comprising:
   a sorting module for sorting the plurality of to-be-migrated data units in a source cluster according to the size of the first depended data volume.

35. The optimization apparatus according to claim 34, further comprising:
   a third acquisition module for acquiring the first depended data volume according to historical data of the to-be-migrated data units.

36. An evaluation apparatus for data migration, comprising:

   a fourth acquisition module for acquiring a second depended data volume of one or more data units to be duplicated from a source cluster to a target cluster before a computing cluster is switched, wherein the second depended data volume is a depended data volume between the to-be-duplicated data units and other data units outside the target cluster;
   a bandwidth status data calculation module for calculating bandwidth status data between clusters after the computing cluster is switched; and
   a judgement module for determining whether a data migration solution is feasible according to whether the bandwidth status data satisfies a preset bandwidth feasibility condition.

37. The evaluation apparatus according to claim 36, **characterized in that** the plurality of to-be-duplicated data units belong to one or more to-be-migrated project units, and the switching a computing cluster comprises: switching all computing tasks in the one or more to-be-migrated project units to the target cluster.

38. The evaluation apparatus according to claim 36, **characterized in that** the bandwidth status data calculation module comprises:

   a first acquisition module for acquiring current bandwidth usage data, wherein the current bandwidth usage data is bandwidth usage data before the computing cluster is switched;
   a second acquisition module for acquiring changed bandwidth usage data caused after the computing cluster is switched according to the second depended data volume of the one or more to-be-duplicated data units;
   an addition module for adding the current bandwidth usage data to the changed bandwidth usage data and generating bandwidth usage data from the addition; and
   a generation module for generating bandwidth status data based on the bandwidth usage data from the addition.

39. The evaluation apparatus according to claim 38, **characterized in that** the bandwidth usage data is sampling data of a bandwidth usage amount corresponding to a time point in a pre-determined time period, and the bandwidth status data comprises the probability of full bandwidth.

40. The evaluation apparatus according to claim 39, **characterized in that**
   the acquiring current bandwidth usage data comprises: acquiring a current bandwidth usage amount, and sampling the current bandwidth usage amount in a pre-determined time period to generate first sampling data;
   the acquiring changed bandwidth usage data caused after the computing cluster is switched according to the second depended data volume of the one or more to-be-duplicated data units comprises: generating second sampling data of a historical bandwidth usage amount corresponding to a time point in the pre-determined time period according to historical data related to the second depended data volume;
   the adding the current bandwidth usage data to the changed bandwidth usage data and generating bandwidth usage data from the addition comprises: adding the first sampling data to the second sampling data to generate third sampling data from the addition; and
   the generating bandwidth status data based on bandwidth usage data from the addition comprises: calculating the probability of full bandwidth based on the third sampling data from the addition.

41. The evaluation apparatus according to claim 40, **characterized in that** the probability of full bandwidth is equal to the length of time when a bandwidth upper limit is exceeded in the third sampling data divided by the time length of the pre-determined time period.

42. The evaluation apparatus according to claim 39, **characterized in that** the determining whether a data migration solution is feasible according to whether the bandwidth status data satisfies a preset bandwidth condition comprises: judging the probability of full bandwidth of a data migration solution according to a preset probability threshold of full bandwidth, and if it exceeds the probability threshold, determining that the data migration solution is infeasible; otherwise, determining that it is feasible.

43. The evaluation apparatus according to claim 36, **characterized in that** the acquiring a second depended data volume of one or more data units to be duplicated from a source cluster to a target cluster comprises: acquiring the second depended data volume according to historical data of the to-be-duplicated data units.

44. A processing apparatus for data migration, comprising:

a duplication module for preferentially duplicating one or more to-be-migrated data units with a relatively high first depended data volume to a target cluster as to-be-duplicated data units, wherein the first depended data volume is all the depended data volumes of the to-be-migrated data units;
a switching module for switching a computing cluster; and
a remaining data migration module for migrating the remaining one or more to-be-migrated data units to the target cluster.

45. The processing apparatus according to claim 44, **characterized in that** the plurality of to-be-migrated data units belong to one or more to-be-migrated project units, and the switching a computing cluster comprises: switching all computing tasks in the one or more to-be-migrated project units to the target cluster.

46. The processing apparatus according to claim 44, further comprising:
a sorting module for sorting the plurality of to-be-migrated data units in a source cluster according to the size of the first depended data volume.

47. The processing apparatus according to claim 46, further comprising:
a third acquisition module for acquiring the first depended data volume according to historical data of the to-be-migrated data units.

**FIGURES**

**FIG. 1**

**FIG. 2**

```
┌─────────────────────────────┐
│   Sort to-be-migrated data  │      100
│  units according to the size│
│    of a first depended      │
│        data volume          │
└─────────────────────────────┘
              │
              ▼
┌─────────────────────────────┐
│   Generate a plurality of   │      101
│    data migration solutions │
└─────────────────────────────┘
              │
              ▼
┌─────────────────────────────┐
│  Calculate bandwidth status │      102
│  data between clusters after│
│   switching the computing   │
│          cluster            │
└─────────────────────────────┘
              │
              ▼
┌─────────────────────────────┐
│ Perform optimized selection │      103
│  on all the data migration  │
│ solutions according to the  │
│   bandwidth status data     │
└─────────────────────────────┘
```

**FIG. 3**

Acquire current bandwidth usage data — 1021

Acquire changed bandwidth usage data — 1022

Generate bandwidth status data based on the bandwidth usage data from the addition — 1023

**FIG. 4**

FIG. 5

FIG. 6

**FIG. 7**

**FIG. 8**

Sort to-be-migrated data units
according to the size of a first
depended data volume

300

Preferentially duplicate one or more
to-be-migrated data units with a
relatively high first depended data
volume to a target cluster

301

Switch the computing cluster

302

Migrate the remaining one or more
to-be-migrated data units to the
target cluster

303

# FIG. 9

FIG. 10

**FIG. 11**

Third acquisition module 14

Sorting module 10

Duplication module 31

Switching module 32

Remaining data migration module 33

**FIG. 12**

# INTERNATIONAL SEARCH REPORT

| International application No. |
| --- |
| **PCT/CN2017/076037** |

## A. CLASSIFICATION OF SUBJECT MATTER

G06F 17/30 (2006.01) i

According to International Patent Classification (IPC) or to both national classification and IPC

## B. FIELDS SEARCHED

Minimum documentation searched (classification system followed by classification symbols)

G06F; H04L

Documentation searched other than minimum documentation to the extent that such documents are included in the fields searched

Electronic data base consulted during the international search (name of data base and, where practicable, search terms used)

WPI; EPODOC; CNPAT; CNKI; IEEE: data, transfer, migration, copy, cluster, optimization, relate, depending, bandwidth, stream

## C. DOCUMENTS CONSIDERED TO BE RELEVANT

| Category* | Citation of document, with indication, where appropriate, of the relevant passages | Relevant to claim No. |
| --- | --- | --- |
| A | CN 105245405 A (MANAGEMENT CENTRE OF SCHOOL OF SOFTWARE TECHNOLOGY ZHEJIANG UNIVERSITY), 13 January 2016 (13.01.2016), description, page 2 | 1-20, 25-43 |
| A | CN 104869140 A (ALIBABA GROUP HOLDING LIMITED), 26 August 2015 (26.08.2015), description, pages 8 and 9 | 21-24, 44-47 |
| A | US 2016057221 A1 (NETAPP, INC.), 25 February 2016 (25.02.2016), the whole document | 1-47 |

☐ Further documents are listed in the continuation of Box C.  ☒ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 04 May 2017 (04.05.2017) | **31 May 2017 (31.05.2017)** |

| Name and mailing address of the ISA/CN: State Intellectual Property Office of the P. R. China No. 6, Xitucheng Road, Jimenqiao Haidian District, Beijing 100088, China Facsimile No.: (86-10) 62019451 | Authorized officer **XIE, Xin** Telephone No.: (86-10) **62413670** |
| --- | --- |

Form PCT/ISA/210 (second sheet) (July 2009)

## INTERNATIONAL SEARCH REPORT
### Information on patent family members

International application No.

**PCT/CN2017/076037**

| Patent Documents referred in the Report | Publication Date | Patent Family | Publication Date |
|---|---|---|---|
| CN 105245405 A | 13 January 2016 | None | |
| CN 104869140 A | 26 August 2015 | None | |
| US 2016057221 A1 | 25 February 2016 | US 2015178014 A1 | 25 June 2015 |

Form PCT/ISA/210 (patent family annex) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201610166580